**Europäisches Patentamt**

**European Patent Office**

**Office européen des brevets**

(19)

(11) Publication number : **0 321 583 B1**

(12)

# EUROPEAN PATENT SPECIFICATION

(45) Date of publication of patent specification :
**17.02.93 Bulletin 93/07**

(51) Int. Cl.⁵ : **C04B 28/18, D21H 11/00**

(21) Application number : **88906033.1**

(22) Date of filing : **24.06.88**

(86) International application number :
**PCT/JP88/00630**

(87) International publication number :
**WO 88/10338 29.12.88 Gazette 88/28**

(54) **FORMED CALCIUM SILICATE PLATE AND PROCESS FOR ITS PRODUCTION.**

The file contains technical information
submitted after the application was filed and
not included in this specification

(30) Priority : **26.06.87 JP 160280/87**

(43) Date of publication of application :
**28.06.89 Bulletin 89/26**

(45) Publication of the grant of the patent :
**17.02.93 Bulletin 93/07**

(84) Designated Contracting States :
**BE DE FR GB IT NL SE**

(56) References cited :
**JP-A- 5 215 516**
**JP-A-54 160 428**
**JP-A-60 264 355**
**JP-A-62 123 053**
**US-A- 4 162 924**

(73) Proprietor : **JAPAN INSULATION Co., Ltd.**
**1-6, Daikoku 1-chome Naniwa-ku Osaka-shi**
**Osaka 556 (JP)**

(72) Inventor : **IDE, Tsutomu**
**1110-69, Oaza Kugo**
**Ono-cho, Ibi-gun Gifu 501-05 (JP)**
Inventor : **HAMADA, Suguru**
**3484-7, Nagabora, Nagara**
**Gifu-shi Gifu 500 (JP)**
Inventor : **KAWAI, Masahiro**
**651, Shiroyashiki**
**Shimonaka-cho, Hajima-shi Gifu 501-63 (JP)**

(74) Representative : **Vossius & Partner**
**Siebertstrasse 4 P.O. Box 86 07 67**
**W-8000 München 86 (DE)**

## Description

Field of the Invention

The present invention relates to molded boards of calcium silicate, and a process for producing the same, and more particularly to molded boards of calcium silicate containing a polymer and a process for producing the same.

Background Art

Molded boards of calcium silicate are widely used as building materials, structure materials or the like because these boards are lightweight and outstanding in incombustibility, heat resistance, etc. However, the calcium silicate molded boards as compared with wood are not fully satisfactory in mechanical strength and are low in water resistance. Further these molded boards have the drawbacks of being poor in workability such as suitability for being cut, machinability, nailability, nail-retaining ability and properties of permitting carving and modeling such as suitability for being grooved, and thus unavoidably have a limited use.

In recent years, it has been proposed to incorporate a vinyl-type polymer, natural or synthetic rubber or like polymer into molded boards of calcium silicate in order to eliminate the foregoing drawbacks of the boards (e.g. Japanese Unexamined Patent Publications Nos. 15516/1977; 160428/1979; 264355/85; and 123053/1987). These publications specifically disclose calcium silicate molded boards having a single-layer structure in which the secondary particles of calcium silicate crystals are interconnected with one another directly and via the polymer.

Such molded boards are given enhanced mechanical strength and improved water resistance and workability due to the presence of the resin. Yet the mechanical strength of the boards remains unsatisfactory. With an increase of specific gravity, a calcium silicate molded product is given enhanced strength in proportion but is deprived of lightweight property among the characteristics of calcium silicate molded product. While the strength of calcium silicate molded product can be improved by using an increased amount of resin, the increase of resin content lowers the incombustibility and heat resistance of the molded product, leading to loss of characteristics of calcium silicate molded product. Because of the single-layer structure, said molded product has high density in the surface portion but low density in the interior, namely irregular density as a whole, so that when exposed to high temperatures as in a fire, the molded product is likely to shrink, deform, warp and crack. Although with an improved workability, such molded product tends to chip off at the cut end during cutting or machining operation and to remain insufficient in nail-retaining ability and carving and modeling properties such as suitability for being grooved.

Disclosure of the Invention

According to the present invention, there are provided molded boards of calcium silicate which, while retaining the characteristics of calcium silicate molded boards such as lightweight characteristic, incombustibility and heat resistance, are significantly improved in mechanical strength, water resistance and workability in which conventional calcium silicate molded boards have been defective, and a process for producing the same.

The present invention provides molded boards of calcium silicate which are far greater in mechanical strength than conventional calcium silicate molded boards of single-layer structure and a process for producing the same.

The present invention also provides molded boards of calcium silicate which are outstanding in workability such as suitability for being cut, machinability, nail-retaining ability, carving and modeling properties, etc. and a process for producing the same.

The present invention further provides molded boards of calcium silicate which are unlikely to deform, warp or crack on exposure to high temperatures as in a fire, and a process for producing the same.

The molded boards of this invention is characterized in that the board is a laminate of a plurality of thin sheets, each of the thin sheets having a thickness of 2 mm or less and comprising secondary particles of calcium silicate crystals, a fibrous material, a polymer and a coagulant, the polymer and the coagulant being adsorbed on the surface of secondary particles; that the secondary particles are interconnected with one another directly and via the polymer adsorbed on the secondary particles; and that the laminated thin sheets are firmly united with one another into an integral board by the secondary particles of calcium silicate crystals and the polymer present on the surface of the sheets.

Our research revealed the following. In the molded board of calcium silicate according to the invention, the polymer and the coagulant are adsorbed and retained on the surface of secondary particles of calcium silicate crystals, the secondary particles are interconnected with one another directly and via the polymer to form thin sheets, and the plurality of thin sheets as laminated are firmly united with one another into an integral body by the secondary particles and the polymer on the surface of sheets. With this structure, the molded boards of the invention exhibit mechanical strength much greater than conventional polymer-containing calcium silicate molded boards while retaining the lightweight property, incombustibility and heat resistance, i.e. characteristics of calcium silicate molded boards, and are outstanding also in heat resistance, water resistance and workability such as suitability for being cut, machinability, nail-retaining ability, carving and modeling properties, etc. Utilizing these advantages, the molded boards of the invention can be widely used not only for applications as synthetic wood for which known calcium silicate molded boards have been used, but also even for applications for which wood has been conventionally employed. Thus the molded boards of the invention are significantly useful. Since the molded boards of the invention are composed of integrally laminated thin sheets each having a thickness of 2 mm or less, the boards are pronouncedly homogeneous throughout its interior as well as at its surface, so that the surface thereof is equal in density to the interior thereof, or the latter is higher in density than the former. With this feature, the boards are unlikely to shrink, deform, warp or crack on exposure to high temperatures as in a fire. Further, even if with a low specific gravity, the molded boards of the invention have great mechanical strength and morevoer, a degree of strength sufficient for use even if they have low specific gravity of about 0.3 g/cm$^3$. Further, the molded boards of the invention are so homogeneous also in the direction of plane that not only the boards of 20 mm or more thickness but also those of less than 20 mm thickness have high shape rententivity and are not apt to warp or shrink during drying or storage.

The molded boards of calcium silicate according to the invention can be produced by forming into thin sheets an aqueous slurry comprising secondary particles of calcium silicate crystals, a fibrous material, a polymer and a coagulant, superposing a plurality of the thin sheets in layers, and press-molding and drying.

The secondary particles of calcium silicate crystals for use in the invention can be prepared by the methods disclosed in, for example, Japanese Examined Patent Publication No.12526/1978 and Japanese Unexamined Patent Publication No.146997/1978, more specifically by heating an aqueous slurry comprising a siliceous material and a calcareous material with stirring under an elevated pressure in an autoclave to undergo a hydrothermal synthesis reaction. The calcium silicate crystals which constitute the secondary particles include xonotlite crystals, wollastonite crystals and tobermorite crystals. The calcium silicate crystals composing the molded boards of the invention can be of a single kind or a mixture of at least two kinds of them. It is desirable that xonotlite crystals be used in a predominant amount among the calcium silicate crystals from the viewpoints of the strength and heat resistance of the resulting molded boards.

Starting materials for producing the calcium silicate crystals can be any of those heretofore known. Useful siliceous materials include, for example, natural amorphous silicic acid, siliceous sand, silica gel, silica flour (such as ferrosilicon dust, etc.), ash of chaff and stalks of grasses (ash of chaff of rice plant, barley or the like), white carbon, diatomaceous earth, silicas obtained by reacting an aluminum hydroxide with the hydrosilicofluoric acid produced as a by-product in a wet process for preparing a phosphoric acid, etc. Examples of useful calcareous materials are quick lime, slaked lime, carbide residuum, cement, etc. These siliceous and calcareous materials are usable singly or at least two of them can be used in mixture. The mole ratio of the calcareous material to the siliceous material can be suitably determined depending on the kind of calcium silicate crystals to be produced. The CaO/SiO$_2$ mole ratio is between about 0.8 and about 1.3 in synthesis of xonotlite crystals and between about 0.7 and about 0.9 in synthesis of tobermorite crystals. The amount of water which is used in preparation of a starting slurry by adding water to said materials is about 5 times or more, preferably about 10 to about 50 times, the weight of the solids of the starting slurry. The starting slurry thus obtained is then subjected to a hydrothermal synthesis reaction with stirring, thereby producing secondary particles of calcium silicate crystals. Preferred reaction conditions are as follows. The reaction is conducted under a saturated aqueous vapor pressure of about 8 kg/cm$^2$ or more, preferably about 10 to about 20 kg/cm$^2$, for formation of xonotlite crystals, or about 4 kg/cm$^2$ or more, preferably about 5 to about 10 kg/cm$^2$, for formation of tobermorite crystals. The reaction time ranges from about 1 to about 8 hours.

When the secondary particles of xonotlite crystals obtained by the hydrothermal synthesis reaction are further baked to about 1000°C, the crystals constituting the secondary particles can be converted to β-wollastonite crystals without change of the shape (secondary particles). The secondary particles of such wollastonite crystals can be also used in the invention.

A fibrous material, a polymer and a coagulant are added to the aqueous slurry of secondary particles of calcium silicate crystals according to the invention. Fibrous materials for use in the invention can be any of usual organic and inorganic fibers. Useful organic fibers include not only woody fibers such as cotton but also cellulosic fibers such as wood pulp, waste paper pulp, knots residuum, flax, shredded straws, rayon and the like, and synthetic fibers such as polyamide, polyester, vinylon, rayon, aramid, polyolefin and the like. Illustrative of useful inorganic fibers are asbestos, rockwool, slag wool, glass fibers, silica fibers, alumina fibers, ceramic fibers, carbon fibers, inorganic whiskers and the like. These fibrous materials are usable singly or at least two of them can be used in mixture. The amount of the fibrous material used can be as small as about 2 to about 30% by weight based on the solids of aqueous slurry containing the fibrous material. According to the invention, the use of a predominant amount of calcium silicate crystals results in production of molded boards of great strength and renders the aqueous slurry suitable for formation into sheets, facilitating the production of desired molded board. A preferred amount of fibrous material used is about 5 to about 15% by weight.

Polymers useful in the invention are, for example, acrylic resins, acrylate copolymers, styreneacrylate copolymers, vinyl acetate resins, ethylene-vinyl acetate copolymers, vinyl chloride resins and like vinyl-type polymers, natural rubbers, styrene-butadiene copolymers (SBR), carboxyl group-containing styrenebutadiene copolymers, acrylonitrile-butadiene copolymers, chloroprene polymers and like synthetic rubbers, phenolic resins, melamine resins and like thermosetting resins and so on. Of these polymers, desirable are acrylate copolymers, styrene-acrylate copolymers, ethylene-vinyl acetate copolymers, carboxy-modified SBR, chloroprene polymers and phenolic resins among which phenolic resins are more preferred because they serve to give molded boards retaining high incombustibility and having great strength and excellent workability, dimensional stability and abrasion resistance. These polymers are usable singly or at least two of them can be used in mixture.

The amount of the polymer used can be selected over a wide range according to the application of a desired molded board. An increased amount of the polymer used provides the molded board with greater strength and higher workability but lowers the characteristics of calcium silicate molded boards such as incombustibility, heat resistance and the like. Usually the amount of the polymer is about 3 to about 20% by weight based on the solids of the aqueous slurry. About 3 to about 8% by weight of the polymer is used when high combustibility is required. When a phenolic resin is used as the polymer, the incombustibility would not be reduced even by use of the resin in a large amount relative to the solids of the slurry. Consequently molded boards of great strength and incombustibility can be obtained even by use of large amount of phenolic resin. Further the use thereof gives molded boards of outstanding workability. A suitable amount of phenolic resin used is in the range of 3 to 30% by weight, preferably 10 to 20% by weight, based on the solids of the slurry. The polymer is used in the form of an aqueous emulsion or aqueous latex when incorporated into a slurry of calcium silicate crystals.

The coagulant to be used conjointly with the polymer in the invention serves to enlarge, strengthen and stabilize the flock in the slurry and to enhance the filtering property of the aqueous slurry to be formed into thin sheets. Useful coagulants can be any of those heretofore known and including, for example, cationic coagulants, anionic coagulants and nonionic coagulants.

Examples of useful cationic coagulants are cationic macromolecular coagulants such as polyethyleneimine, dialkylamine-epichlorohydrin polycondensate, polyamideamine-epichlorohydrin modified product, cationic polyacrylamide and the like, and cationic inorganic coagulants such as aluminum polychloride, aluminum sulfate, sodium aluminate, ferrous sulfate, ferric sulfate, ferric chloride and the like. Specific examples of anionic coagulants are ammonium polyacrylate, sodium polyacrylate and like polyacrylates, acrylamide-acrylic acid copolymers and like macromolecular coagulants. Exemplary of useful nonionic coagulants are polyacrylamide, polyethylene oxide and like macromolecular coagulants. Of these coagulants, desirable are cationic macromolecular coagulants having a molecular weight of about 3,000,000 to about 5,000,000, anionic macromolecular coagulants having a molecular weight of about 3,000,000 to about 10,000,000 and nonionic macromolecular coagulants having a molecular weight of about 3,000,000 to about 10,000,000. Further said anionic macromolecular coagulants have preferably an ionic strength of 1.5 meq/g or less. The ionic strength is given by an equation shown below. The neutralization equivalent in the equation is obtained by adding a specific amount of methylglycol chitosan (cationic reagent) to an aqueous solution of anionic macromolecular coagulant, controlling the pH of the mixture to 10, adding Toluidine Blue as an indicator to the mixture and titrating the mixture with an aqueous solution of polyvinyl potassium sulfate (anionic reagent).

$$\text{Ionic strength (meq/g)} = \frac{\text{Neutralization equivalent}}{\text{Solids of anionic coagulant}}$$

The amount of the coagulant used is, based on the solids of the aqueous slurry, about 0.05 to about 1.0 % by weight when using a cationic macromolecular coagulant, or about 0.05 to about 1.0% by weight when using an anionic macromolecular coagulant or a nonionic macromolecular coagulant, or less than about 1.5% by weight in the combined amount of these two coagulants when conjointly using them. The coagulant used can improve the filtering property of solids of the slurry, making it possible to form thin sheets with high efficiency and to produce a molded board of great strength.

Further, various properties of a calcium silicate molded product can be improved by adding additives to the slurry prior to molding. For example, the molded product may contain gypsum or cement to improve the mechanical strength; aluminum hydroxide, natural wollastonite or clay to enhance the heat resistance; a coloring agent to provide a color; and a carbonaceous substance, carbide, nitride, silicide, metallic oxide or the like to improve the heat insulation properties. Examples of useful carbonaceous substances are active carbon, charcoal, coal, carbon black, graphite, etc. Examples of useful carbides are silicon carbide, boron carbide, titanium carbide, etc. Examples of useful nitrides are silicon nitride, titanium nitride, etc. Examples of useful silicides are calcium silicide, etc. Illustrative of metallic oxides are iron oxides, titanium oxides, tin oxides, manganese oxides, zirconium oxides, ilmenite, zircon, chromite, cerium oxides, lanthanum oxides, yttrium oxides, neodymium oxides, etc.

For producing the molded board of the invention, an aqueous slurry of secondary particles of calcium silicate crystals is prepared first. The aqueous slurry can be prepared by subjecting a calcareous material and a siliceous material to a hydrothermal synthesis reaction as described hereinbefore, or by dispersing in water the secondary particles of calcium silicate crystals prepared for this purpose. To the aqueous slurry are added a fibrous material, a polymer and a coagulant. The amounts of these components used are accommodated to the desired contents thereof, calculated as the solids, in the board.

Then thin sheets are formed from the aqueous slurry comprising the secondary particles of calcium silicate crystals, fibrous material, polymer and coagulant. In formation of thin sheets, it is desirable to adjust the solids concentration of the slurry to about 0.2 to about 3% by weight.

Thin sheets are formed by any of continuous methods (cylinder-type, Fourdrinier-type, short wire-type or the like) and batchwise methods (CTC method, Chapman method or the like). A plurality of thin sheets thus formed are superposed over one another into a laminated sheet. The laminated sheet is cut by a cutter when so required and press-molded to a predetermined thickness with heating while being dried. While molding and drying can be consecutively performed, it is preferred to press-mold and dry the sheets at the same time with a hot press or the like with heating. A suitable heating temperature is about 120 to about 200°C and an adequate molding pressure is about 10 to about 100 kg/cm$^2$.

When a phenolic resin is used as the polymer, it is desirable to conduct hot pressing at a heating temperature of about 160 to about 200°C under a molding pressure of about 10 to about 100 kg/cm$^2$. The phenolic resin is cured during hot pressing.

The press-molding of superposed thin sheets causes the secondary particles of calcium silicate crystals in each thin sheet to become interconnected with one another directly and through the polymer adsorbed on the secondary particles with the result that each thin sheet is strengthened while the laminated thin sheets are united with one another by the secondary particles of calcium silicate crystals and the polymer present on the surface of each thin sheet, giving a molded board of great strength with the thin sheets firmly united with one another into a integral body. The layers constituting the molded board of the invention are integrally firmly adhered to one another by the secondary particles of calcium silicate crystals and the polymer adsorbed on the secondary particles. A preferable molded board of the invention, for example, even immersed in water at 20°C for 24 hours would cause no peeling, show only a slight reduction in bending strength and remain high in dimensional stability.

Each of thin sheets constituting the board of the invention has a thickness of about 2 mm or less, preferably about 0.2 to about 1.0 mm. The board of the invention is composed of a plurality of said thin sheets, more specifically 3 to 200 thin sheets, superposed and united into an integral body. The molded board of the invention even with a large thickness is homogeneous therethrough and has high bending strength. Thus according to the invention, it is possible to obtain a thick board of 20 mm or more thickness with great strength. Further because of high homogeneity also in the direction of plane, a molded board having a thickness of 20 mm or less, or even a thickness of about 1 to about 15 mm, conventionally considered difficult to produce, can be produced according to the invention with substantially no warping nor contraction occurring during drying.

Examples

The present invention will be described below in greater detail with reference to Preparation Examples and Examples in which parts and percentages are all by weight unless otherwise specified.

Reference Example 1

A starting slurry was prepared by adding 49 parts of quick lime slaked with hot water at about 85°C and 51 parts of silicic acid powder (CaO/SiO$_2$ mole ratio of 1.0) to water in 12 times the amount of the solids. The starting slurry was subjected to a hydrothermal synthesis reaction under a pressure of 15 kg/cm$^2$ with stirring for 4 hours, giving an aqueous slurry of secondary particles of xonotlite crystals.

Examples 1 to 5

To 90 parts (solids) of the aqueous slurry of secondary particles of xonotlite crystals obtained in Reference Example 1 were added a predetermined amount of a fibrous material selected from glass fibers, pulp and ceramic fibers and a predetermined amount (solids) of an emulsion of acrylic resin. Water was added to adjust the slurry to a concentration of 2.0 %. To the slurry were added 0.2 part of a cationic macromolecular coagulant and 0.1 part of an anionic macromolecular coagulant, and the resulting mixture was adjusted with water to a concentration of 1.0 %.

The thus obtained slurry was formed into thin sheets (weighing 180 $g/m^2$) with use of a tapping test machine. The sheets were superposed over one another, and simultaneously press-molded and dried with a hot press at 120 to 150°C, giving a 12 mm-thick molded board of calcium silicate according to the present invention.

Table 1 shows the amount of the components, suitability for forming into thin sheets, number of laminated thin sheets and properties of the molded board.

Table 1

| Amount of components (part by weight) | Example | | | | |
|---|---|---|---|---|---|
| | 1 | 2 | 3 | 4 | 5 |
| Xonotlite secondary particles | 86.7 | 83.7 | 80.7 | 87.7 | 89.7 |
| Pulp | 8 | 8 | 8 | – | – |
| Glass fiber | 2 | 2 | 2 | 2 | 4 |
| Ceramic fiber | – | – | – | 4 | – |
| Acrylic resin | 3 | 6 | 9 | 6 | 6 |
| Cationic coagulant | 0.2 | 0.2 | 0.2 | 0.2 | 0.2 |
| Anionic coagulant | 0.1 | 0.1 | 0.1 | 0.1 | 0.1 |
| Suitability for forming into sheets | A | A | A | B | B |

Table 1 (continued)

| Properties of molded product | Example | | | | |
|---|---|---|---|---|---|
| | 1 | 2 | 3 | 4 | 5 |
| Thickness (mm) | 12 | 12 | 12 | 12 | 12 |
| Number of laminated sheets (number) | 40 | 40 | 40 | 40 | 40 |
| Density (g/cm$^3$) | 0.60 | 0.61 | 0.61 | 0.60 | 0.59 |
| Bending strength (kg/cm$^2$) | 175 | 210 | 225 | 190 | 180 |
| Thermal linear shrinkage percentage(%) | 1.1 | 1.2 | 1.4 | 1.0 | 1.1 |
| Incombustibility | A | A | B | A | A |
| Workability | A | A | A | A | A |
| Water resistance | A | A | A | A | A |
| Resistance to freezing and thawing | A | A | A | A | A |
| Nail-retaining ability | A | A | A | A | A |
| Screw-retaining ability | A | A | A | A | A |

The following is a notation of components used in Table 1.
Ceramic fiber: "S-Fiber" (trade name), product of Shin-Nittetsu Kagaku K.K.
Acrylic resin: "Boncoat SFC-300" (trade name), product of Dainippon Ink And Chemicals Inc.
Cationic coagulant: "Sunfloc C-009P" (trade name), product of Sanyo Kasei Kogyo Co., Ltd.
Anionic coagulant: "Sunfloc AH-210P" (trade name), product of Sanyo Kasei Kogyo Co., Ltd.

Properties of the molded products in the list were determined by the following methods.

1) Density, bending strength and thermal linear shrinkage percentage

These properties were determined according to JIS A 9510. The thermal linear shrinkage percentages are those obtained by heating for 3 hours at 1000°C.

2) Incombustibility

This property was determined according to Notice No. 1828 of Ministry of Construction, Japan, and the result was evaluated according to the following criteria.

A: Acceptable as incombustible

B: Acceptable as almost incombustible

C: Rejected for not being incombustible

3) Workability

The molded products were nailed, sawed, planed, carved or modeled (grooved) and otherwise tested. The workability was evaluated according to the following criteria as compared with the results obtained by testing wood for workability.

A: Good

B: Fair

C: Poor

4) Water resistance

The water resistance was evaluated according to the following criteria in terms of the bending strength and dimensional stability determined after immersion in water for 24 hours (20°C).

A: Good

B: Fair

C: Poor

5) Resistance to freezing and thawing

This property was determined according to JIS A 5108 (10 cycles), and the result was evaluated according to the following criteria.

A: Good

B: Fair

C: Poor

6) Suitability for forming into sheets

The property was evaluated according to the following criteria in terms of the filtering property and the strength of the thin sheets.

A: The filtering property and the strength of the sheet were satisfactory and thin sheets were smoothly formed.

B: A slight difficulty was encountered in filtration, and the formation of thin sheets took a considerable time.

C: Thin sheets failed to be formed due to the poor strength.

7) Nail-retaining ability

According to JIS Z 2121.

A: Good

B: Fair

C: Poor

8) Screw-retaining ability

A: Good

B: Fair

C: Poor

Example 6

The molded board of the present invention was produced in the same manner as in Example 2 with the exception of using a carboxy-modified styrene-butadiene copolymer (trade name "Nipol LX-430", product of Nippon Zeon Co., Ltd.) in place of acrylic resin. Properties of the molded board are shown below.

EP 0 321 583 B1

Table 2

| | Example 6 |
|---|---|
| Density (g/cm$^3$) | 0.60 |
| Bending strength (kg/cm$^2$) | 220 |
| Thermal linear shrinkage percentage (%) | 1.2 |
| Incombustibility | A |
| Workability | A |
| Water resistance | A |
| Resistance to freezing and thawing | A |
| Nail-retaining ability | A |
| Screw-retaining ability | A |

Example 7

The molded board of the invention was produced in the same manner as in Example 1 except that a latex of chloroprene polymer (trade name "Neoplene 115", product of Showa Neoplene Co., Ltd.), and an emulsion of styrene-acrylate copolymer (trade name "OLX-2153", product of Showa Highpolymer Co., Ltd.) were used in amounts of 3 parts and 1.5 parts, calculated as solids, respectively in place of acrylic resin and that the laminate consisted of 37 thin sheets. Shown below are properties of the obtained board.

Table 3

| | Example 7 |
|---|---|
| Density (g/cm$^3$) | 0.60 |
| Bending strength (kg/cm$^2$) | 198 |
| Thermal linear shrinkage percentage (%) | 1.2 |
| Incombustibility | A |
| Workability | A |
| Water resistance | A |
| Resistance to freezing and thawing | A |
| Nail-retaining ability | A |
| Screw-retaining ability | A |

Examples 8 to 11

To the aqueous slurry of secondary particles of xonotlite crystals obtained in Reference Example 1 were added glass fibers, pulp, specific resins and then an anionic coagulant. The mixture was adjusted with water to a concentration of 1.0 %.

The thus obtained slurry was formed into thin sheets (weighing 180 g/m$^2$) with use of a Fourdrinier-type forming device. The sheets were superposed over one another, and press-molded and dried at the same time with a hot press at 120 to 170°C, giving a 12 mm-thick board of calcium silicate according to the invention. Table 4 below shows the results.

11

Table 4

| | Example | | | |
|---|---|---|---|---|
| | 8 | 9 | 10 | 11 |
| Amount of components (part by weight) | | | | |
| Xonotlite secondary particles | 83.8 | 76.8 | 73.8 | 76.8 |
| Pulp | 8 | 8 | 8 | 8 |
| Glass fiber | 2 | 2 | 2 | 2 |
| Phenolic resin  1) | 6.0 | 13.0 | 16.0 | |
| Ethylene-vinyl acetate copolymer  2) | | | | 13.0 |
| Anionic coagulant  3) | 0.2 | 0.2 | 0.2 | 0.2 |
| Suitability for forming into sheets | A | A | A | A |

Note: 1) Phenolic resin: "Shownol CKE2370" (trade name), product of
         Showa Highpolymer Co., Ltd.
      2) Ethylene-vinyl acetate copolymer: "Polyzol AD-5" (trade name),
         product of Showa Highpolymer Co., Ltd.
      3) Anionic coagulant: "Sunfloc AH-400P" (trade name), product of
         Sanyo Kasei Kogyo Co., Ltd.

EP 0 321 583 B1

Table 4 (continued)

| Properties of molded product | Example 8 | 9 | 10 | 11 |
|---|---|---|---|---|
| Thickness (mm) | 12 | 12 | 12 | 12 |
| Number of laminated sheets (number) | 40 | 40 | 40 | 40 |
| Density (g/cm$^3$) | 0.60 | 0.61 | 0.59 | 0.60 |
| Bending strength (kg/cm$^2$) | 148 | 230 | 242 | 228 |
| Thermal linear shrinkage percentage(%) | 1.0 | 1.4 | 1.5 | 1.8 |
| Incombustibility | A | A | A | B |
| Workability | A | A | A | A |
| Water resistance | A | A | A | A |
| Resistance to freezing and thawing | A | A | A | A |
| Nail-retaining ability | A | A | A | A |
| Screw-retaining ability | A | A | A | A |

Examples 12 to 18

Specific fibers and a styrene-acrylate copolymer were added to the aqueous slurry of secondary particles of xonotlite crystals obtained in Reference Example 1, followed by addition of specific coagulants. The mixture was adjusted with water to a concentration of 1.0 %.

The thus obtained slurry was made into thin sheets (weighing 180 g/m²) using a Fourdrinier-type forming device. The sheets were superposed over one another and simultaneously press-molded and dried with a hot press at 160 to 170°C, giving a 12 mm-thick board of calcium silicate according to the invention. Table 5 below shows the results.

Table 5

|  | Example | | |
|---|---|---|---|
|  | 12 | 13 | 14 |
| Amount of components (part by weight) | | | |
| Xonotlite secondary particles | 86.7 | 86.7 | 90.7 |
| Pulp | 5 | 5 | 0 |
| Glass fiber | 5 | 5 | 5 |
| Carbon fiber 1) | – | – | 1 |
| Aramid fiber 2) | – | – | – |
| Styrene acrylate copolymer 3) | 3 | 3 | 3 |
| Cationic coagulant 4) | 0.2 | – | – |
| Anionic coagulant 5) | 0.1 | 0.3 | 0.3 |
| Nonionic coagulant 6) | – | – | – |
| Suitability for forming into sheets | A | A | A |

Note: 1) Carbon fiber: "Kureka chop C-110T" (trade name), product of Kureha Chemical Industry Co., Ltd.
2) Aramid fiber: "Technora T-320" (trade name), product of Teijin Limited
3) Styrene acrylate: "OLX 2153" (trade name), product of Showa Highpolymer Co., Ltd.
4) Cationic coagulant: "Sunfloc C-009P" (trade name), product of Sanyo Kasei Kogyo Co., Ltd.
5) Anionic coagulant: "Sunfloc C-009P" (trade name), product of Sanyo Kasei Kogyo Co., Ltd.
6) Nonionic coagulant: "Sunfloc N-505P" (trade name), product of Sanyo Kasei Kogyo Co., Ltd.

Table 5 (continued)

| | Example | | |
|---|---|---|---|
| | 12 | 13 | 14 |
| Properties of molded product | | | |
| Thickness (mm) | 12 | 12 | 12 |
| Number of laminated sheets (number) | 27 | 27 | 27 |
| Density (g/cm$^3$) | 0.39 | 0.39 | 0.40 |
| Bending strength (kg/cm$^2$) | 100 | 95 | 110 |
| Thermal linear shrinkage percentage(%) | 1.1 | 1.1 | 1.0 |
| Incombustibility | A | A | A |
| Workability | A | A | A |
| Water resistance | A | A | A |
| Resistance to freezing and thawing | A | A | A |
| Nail-retaining ability | A | A | A |
| Screw-retaining ability | A | A | A |

Table 5 (continued)

| | Example | | | |
|---|---|---|---|---|
| | 15 | 16 | 17 | 18 |
| Amount of components (part by weight) | | | | |
| Xonotlite secondary particles | 90.7 | 87.7 | 87.7 | 87.7 |
| Pulp | — | — | — | — |
| Glass fiber | 5 | 5 | 5 | 5 |
| Carbon fiber | — | — | — | — |
| Aramid resin | 1 | — | — | — |
| Styrene acrylate copolymer | 3 | 6 | 6 | 6 |
| Cationic coagulant | — | — | — | — |
| Anionic coagulant | 0.3 | 0.3 | — | — |
| Nonionic coagulant | — | — | 0.3 | 0.3 |
| Suitability for forming into sheets | A | A | A | A |

Table 5 (continued)

| | Example | | | |
|---|---|---|---|---|
| | 15 | 16 | 17 | 18 |
| Properties of molded product | | | | |
| Thickness (mm) | 12 | 12 | 12 | 12 |
| Number of laminated sheets (number) | 27 | 27 | 27 | 21 |
| Density (g/cm$^3$) | 0.40 | 0.40 | 0.40 | 0.30 |
| Bending strength (kg/cm$^2$) | 113 | 105 | 103 | 56 |
| Thermal linear shrinkage percentage (%) | 1.1 | 1.2 | 1.2 | 1.6 |
| Incombustibility | A | A | A | A |
| Workability | A | A | A | A |
| Water resistance | A | A | A | A |
| Resistance to freezing and thawing | A | A | A | A |
| Nail-retaining ability | A | A | A | A |
| Screw-retaining ability | A | A | A | A |

Example 19

Thin sheets were produced in the same manner as in Example 8. The thin sheets were superposed over one another, and simultaneously press-molded and dried with a hot press at 160 to 170°C, giving a 40 mm-thick board of calcium silicate (135 thin sheets laminated) according to the invention. Table 6 below shows the results.

Table 6

|  | Example 19 |
|---|---|
| Density (g/cm$^3$) | 0.60 |
| Bending strength (kg/cm$^2$) | 150 |
| Thermal linear shrinkage percentage (%) | 1.1 |
| Incombustibility | A |
| Workability | A |
| Water resistance | A |
| Resistance to freezing and thawing | A |
| Nail-retaining ability | A |
| Screw-retaining ability | A |

To check the homogeneity of density, the obtained molded product was divided into 5 pieces in the direction of thickness. Then the density of each piece was determined. The top and bottom pieces had a density of 0.592 g/cm³, and the other 3 pieces had a density of from 0.611 to 0.612 g/cm³.

**Claims**

1. A molded board of calcium silicate comprising secondary particles of calcium silicate crystals, a fibrous material and a polymer, said secondary particles being interconnected with one another directly and via the polymer adsorbed on said secondary particles,
   **characterized in** that
   a) the board is a laminate of a plurality of thin sheets, each of the thin sheets having a thickness of 2 mm or less and comprising said secondary particles, fibrous material, polymer and a coagulant, the polymer and the coagulant being adsorbed on the surface of said secondary particles; and
   b) the laminated thin sheets are firmly united with another into an integral board by said secondary particles and the polymer both present on the surface of the sheets.

2. A molded board according to claim 1, characterized in that the polymer is at least one member selected from the group consisting of acrylate copolymers, styrene-acrylate copolymers, ethylene-vinyl acetate copolymers, carboxy-modified styren-butadiene copolymers, chloroprene polymers and phenolic resins.

3. A molded board according to claim 2, characterized in that the polymer is a phenolic resin.

4. A molded board according to claim 1 characterized in that the calcium silicate crystals are tobermorite crystals, xonotlite crystals and/or wollastonite crystals.

5. A molded board according to claim 1, characterized in that the coagulant is a macromolecular one.

6. A molded board according to claim 5, characterized in that the macromolecular coagulant is a cationic macromolecular coagulant, anionic macromolecular coagulant or nonionic macromolecular coagulant.

7. A process for producing a molded board as defined in one of the preceding claims,
   **characterized by**

the steps of

a) forming thin sheets from an aqueous slurry comprising secondary particles of calcium silicate crystals, a fibrous material, a polymer and a coagulant;

b) superposing a plurality of the obtained thin sheets in layers; and

c) press-molding and drying the layers.

8. A process according to claim 7, characterized in that the polymer is at least one member selected from the group consisting of acrylate copolymers, styrene-acrylate copolymers, ethylene-vinyl acetate copolymers, carboxy-modified styrene-butadiene copolymers, chloroprene polymers and phenolic resins.

9. A process according to claim 8, characterized in that the polymer is a phenolic resin.

## Patentansprüche

1. Geformte Calciumsilikatplatte, umfassend sekundäre Teilchen aus Calciumsilikatkristallen, ein faserförmiges Material und ein Polymer, wobei die sekundären Teilchen direkt untereinander und über das an den sekundären Teilchen adsorbierte Polymer verbunden sind, dadurch gekennzeichnet, daß

a) die Platte ein Laminat aus einer Mehrheit dünner Platten ist, jede der dünnen Platten eine Stärke von 2 mm oder weniger aufweist und die sekundären Teilchen, faseriges Material, Polymer und ein Koagulans umfaßt, wobei das Polymer und das Koagulans an der Oberfläche der sekundären Teilchen adsorbiert sind; und

b) die laminierten dünnen Platten eng miteinander zu einer Integralplatte durch die sekundären Teilchen und das Polymer, die beide auf der Oberfläche der Platten vorliegen, vereinigt sind.

2. Formplatte nach Anspruch 1, dadurch gekennzeichnet, daß das Polymer mindestens eines aus der Gruppe der Acrylat-copolymeren, Styrol-Acrylat-Copolymeren, Ethylen-Vinyl-acetat-Copolymeren, carboxymodifizierten Styrol-Butadien-Copolymeren, Chloroprenpolymeren und Phenolharze ist.

3. Formplatte nach Anspruch 2, dadurch gekennzeichnet, daß das Polymer ein Phenolharz ist.

4. Formplatte nach Anspruch 1, dadurch gekennzeichnet, daß die Calciumsilikatkristalle Tobermoritkristalle, Xonotlitkristalle und/oder Wollastonitkristalle sind.

5. Formplatte nach Anspruch 1, dadurch gekennzeichnet, daß das Koagulans ein makromolekulares ist.

6. Formplatte nach Anspruch 5, dadurch gekennzeichnet, daß das makromolekulare Koagulans ein kationisches makromolekulares Koagulans, anionisches makromolekulares Koagulans oder nicht-ionisches makromolekulares Koagulans ist.

7. Verfahren zur Herstellung einer Formplatte gemäß einem der vorangehenden Ansprüche, gekennzeichnet durch die Schritte von

a) Formen dünner Platten aus einer wäßrigen Aufschlämmung, umfassend sekundäre Teilchen von Calciumsilikatkristallen, faseriges Material, ein Polymer und ein Koagulans;

b) Übereinanderlegen einer Mehrzahl der erhaltenen dünnen Platten in Schichten; und

c) Preßformen und Trocknen der Schichten.

8. Verfahren nach Anspruch 7, dadurch gekennzeichnet, daß das Polymer mindestens eines aus der Gruppe der Acrylat-copolymeren, Styrol-Acrylat-Copolymeren, Ethylen-Vinyl-acetat-Copolymeren, carboxymodifizierten Styrol-Butadien-Copolymeren, Chloroprenpolymeren und Phenolharzen ist.

9. Verfahren nach Anspruch 8, dadurch gekennzeichnet, daß das Polymer ein Phenolharz ist.

## Revendications

1. Panneau moulé en silicate de calcium, comprenant des particules secondaires de cristaux de silicate de calcium, une matière fibreuse et un polymère, lesdites particules secondaires étant mutuellement interconnectées de manière directe et via le polymère adsorbé sur lesdites particules secondaires,

caractérisé en ce que

a) le panneau est un lamifié de plusieurs feuilles minces, chacune des feuilles minces ayant une épaisseur de 2 mm ou moins et comprenant lesdites particules secondaires, la matière fibreuse, le polymère et un coagulant, le polymère et le coagulant étant adsorbés à la surface desdites particules secondaires; et

b) les minces feuilles lamifiées sont fermement jointes l'une à l'autre pour former un panneau solidaire à l'intervention desdites particules secondaires et du polymère, tous deux étant présents à la surface des feuilles.

2. Panneau moulé selon la revendication 1, caractérisé en ce que le polymère est au moins un élément choisi parmi le groupe comprenant les copolymères d'acrylate, les copolymères de styrène-acrylate, les copolymères d'éthylène-acétate de vinyle, les copolymères de styrène-butadiène à modification carboxyle, les polymères de chloroprène et les résines phénoliques.

3. Panneau moulé selon la revendication 2, caractérisé en ce que le polymère est une résine phénolique.

4. Panneau moulé selon la revendication 1, caractérisé en ce que les cristaux de silicate de calcium sont des cristaux de tobermorite, des cristaux de xonotlite et/ou des cristaux de wollastonite.

5. Panneau moulé selon la revendication 1, caractérisé en ce que le coagulant est un coagulant macromoléculaire.

6. Panneau moulé selon la revendication 5, caractérisé en ce que le coagulant macromoléculaire est un coagulant macromoléculaire cationique, un coagulant macromoléculaire anionique ou un coagulant macromoléculaire non ionique.

7. Procédé pour fabriquer un panneau moulé tel que défini dans l'une des revendications précédentes, caractérisé par

les étapes consistant à :

a) façonner des feuilles minces à partir d'une bouillie aqueuse comprenant des particules secondaires de cristaux de silicate de calcium, une matière fibreuse, un polymère et un coagulant;

b) superposer en couches plusieurs des feuilles minces obtenues; et

c) comprimer et sécher les couches.

8. Procédé selon la revendication 7, caractérisé en ce que le polymère est au moins un élément choisi parmi le groupe comprenant les copolymères d'acrylate, les copolymères de styrène-acrylate, les copolymères d'éthylène-acétate de vinyle, les copolymères de styrène-butadiène à modification carboxyle, les polymères de chloroprène et les résines phénoliques.

9. Procédé selon la revendication 8, caractérisé en ce que le polymère est une résine phénolique.